# EUROPÄISCHE PATENTSCHRIFT

(11) **EP 3 845 354 B1**
(45) Veröffentlichungstag und Bekanntmachung des Hinweises auf die Patenterteilung: **28.08.2024**
(21) Anmeldenummer: 20209675.6
(22) Anmeldetag: 25.11.2020
(51) Int. Cl.: B28B 23/00, B28B 23/04, B28B 23/06, B28B 21/60, F03D 13/20, E04C 5/07, E04C 5/08, E04C 5/12, E04H 12/12, E04H 12/16

(54) **VERFAHREN ZUM HERSTELLEN VON SEGMENTEN FÜR EINEN TURM, VORGESPANNTES SEGMENT, TURMRING, TURM UND WINDENERGIEANLAGE**
METHOD OF MANUFACTURING SEGMENTS FOR A TOWER, PRESTRESSED SEGMENT, TOWER RING, TOWER AND WIND TURBINE
PROCÉDÉ DE FABRICATION DE SEGMENTS POUR UNE TOUR, SEGMENT PRÉCONTRAINT, ANNEAU DE TOUR, TOUR ET ÉOLIENNE

(30) Priorität: 10.12.2019 DE 102019133730
(43) Veröffentlichungstag der Anmeldung: 07.07.2021
(73) Patentinhaber: Wobben Properties GmbH, 26607 Aurich (DE)
(72) Erfinder: Stracke, Olaf, 26725 Emden (DE)
(74) Vertreter: Eisenführ Speiser

(56) Entgegenhaltungen:
- EP-A2- 2 305 923
- EP-B1- 2 253 782
- WO-A1-2007/074840
- WO-A1-2014/040653
- DE-C1- 19 719 049
- US-B1- 9 062 662

## Beschreibung

Die Erfindung betrifft ein Verfahren zum Herstellen von Segmenten für einen Turm, insbesondere einer Windenergieanlage, und ein Segment für einen Turm. Ferner betrifft die Erfindung einen Turmring für einen Turm, einen Turm einer Windenergieanlage und eine Windenergieanlage.

Türme, insbesondere Türme von Windenergieanlagen, können Höhen von über 100 m, beispielsweise 135 m, aufweisen und im Betrieb hohen mechanischen Belastungen ausgesetzt sein. Türme von Windenergieanlagen sind häufig als Stahlturm, als Betonturm, umfassend oder bestehend aus Stahlbeton und/oder Spannbeton, oder als Hybridturm, umfassend einen Betonturmabschnitt und einen Stahlturmabschnitt, ausgebildet. Ein Betonturm ist insbesondere ein Turm, der zum überwiegenden Teil aus Beton gefertigt ist, wobei jedoch auch Abschnitte aus einem anderen Material, vorzugsweise Stahl, oder mehreren verschiedenen Materialien hergestellt sein können. Die hier beschriebene Lösung bezieht sich insbesondere auf Betontürme und/oder Hybridtürme, insbesondere den Betonturmabschnitt eines Hybridturms. Wenn im Folgenden auf Betontürme Bezug genommen wird, sind damit insbesondere Betontürme und/oder Hybridtürme, insbesondere Betonturmabschnitte von Hybridtürmen, mit umfasst.

Zum Versteifen und Vorspannen von Betontürmen, insbesondere von Spannbetontürmen, wie beispielsweise bei Betontürmen von Windenergieanlagen, werden häufig Spannglieder verwendet. Hierzu werden die Spannglieder entsprechend am Turm, zum Beispiel am

Turmfuß oder Fundament und an der Turmwandung verankert, um den Turm über die Höhe vorzuspannen. Die Spannglieder können in der Turmwandung verlaufen, was auch als interne Vorspannung, bzw. intern geführte Spannglieder, bezeichnet wird. Hierzu werden beim Betonieren meist leere Hülsen einbetoniert, durch die später die Spannglieder gezogen werden. Alternativ können die Spannglieder auch außerhalb der Turmwandung, beispielsweise auf der Turminnenseite, verlaufen, was auch als externe Vorspannung, bzw. extern geführte Spannglieder, bezeichnet wird. Die Verankerung der Spannglieder, meist am Turmfuß und/oder am Turmkopf, kann beispielsweise über einen Festanker und/oder einen Spannanker erfolgen.

Betontürme für Windenergieanlagen sind z.B. bekannt aus WO 2011/063983 A1 WO 2012/168467 A2.

Die Herstellung von Betontürmen ist insgesamt zeit- und kostenintensiv. Beispielsweise sind für das Versteifen und Vorspannen häufig ein hoher Personal- und Zeitaufwand sowie der Einsatz teurer Spezialwerkzeuge notwendig.

Das Deutsche Patent- und Markenamt hat in der Prioritätsanmeldung zu vorliegender Anmeldung folgenden Stand der Technik recherchiert: EP 2 305 923 A2, EP 2 253 782 B1, DE 10 2004 033 015 A1, DE 603 17 372 T2, DE 10 2011 107 804 A1, Use of Fibre Reinforced Polymers (FRP) in concrete structures, DE 10 2012 210 877 A1, DE 10 2013 108 692 A1, WO 2014/ 037 421 A1, CN 101851985 A.

EP 2 305 923 A2 offenbart ein Verfahren zum Herstellen eines Turms einer Windenergieanlage mit einer Vielzahl von Turmabschnitten, wobei mindestens einer der Turmabschnitte ein erstes Betonsegment, ein zweites Betonsegment, das getrennt von dem ersten Betonsegment ausgebildet ist, und ein drittes Betonsegment, das getrennt von dem ersten Betonsegment und dem zweiten Betonsegment ausgebildet ist, umfasst, wobei das dritte Betonsegment zwischen dem ersten Betonsegment und dem zweiten Betonsegment angeordnet ist. Gemäß einem Aspekt umfasst das Verfahren das Bereitstellen mindestens eines Strangs aus faserverstärktem Kunststoff, das Einbetten eines ersten Abschnitts des Strangs in ein erstes Betonsegment und das Einbetten eines zweiten Abschnitts des Strangs in ein zweites Betonsegment umfasst, so dass ein dritter Abschnitt des Strangs sich vom ersten Betonsegment zum zweiten Betonsegment erstreckt.

WO 2007/074840 A1 offenbart einen faserverstärkten Kunststoffstab, der durch festes Verbinden von faserverstärkten Kunststoffstäben miteinander hergestellt werden kann; und eine Struktur mit mindestens einer Verbindung zwischen faserverstärkten Kunststoffstäben. DE 197 19 049 C1 offenbart ein Verfahren zur Herstellung textilbewehrter Bauelemente bzw. Verstärkungsschichten für Bauelemente aus mineralisch gebundenen Baustoffen, insbesondere Beton, bei dem als Bewehrungsmaterial gitterartige Textilstrukturen aus betonverträglichen Hochleistungsfasern eingesetzt werden. EP 2 253 782 B1 betrifft eine vertikale Tragstruktur oder einen Turm für Windkraftanlagen zur Erzeugung von elektrischer Energie oder für andere Zwecke aus Spannbeton, die einen kegelstumpfförmigen oder zylindrischen Säulenschaft aus Spannbeton mit variabler Höhe aufweist, der mittels ringförmiger Sektoren aufgebaut ist, von denen jeder mehrere Wandteile mit halbkreisförmigem oder polygonalem Querschnitt oder halbkreisförmige oder polygonale Sektoren umfasst, die in Längsrichtung miteinander verbunden sind, und im Falle mehrerer in der Höhe übereinanderliegender Sektoren in Querrichtung mit einem System verbunden sind, das die strukturelle Kontinuität des Turms gewährleistet.

Der Erfindung liegt daher die Aufgabe zugrunde eine verbesserte Lösung bereitzustellen, welche wenigstens eines der genannten Probleme adressiert. Insbesondere ist es Aufgabe der Erfindung, eine Lösung bereitzustellen, die den Personal-, Zeit- und/oder Kostenaufwand für die Herstellung eines Betonturms verringert.

Gemäß einem ersten Aspekt wird die eingangs genannte Aufgabe gelöst durch ein Verfahren zum Herstellen von Segmenten für einen Turm gemäß Anspruch 1.

Ein Betonturm weist vorzugsweise eine rohrförmige, konische oder kegelstumpfförmige Geometrie auf, wobei der Durchmesser des Turms vorzugsweise entlang seiner longitudinalen Erstreckung in vertikaler Richtung nach oben hin abnimmt. Der Querschnitt eines Turms, orthogonal zur longitudinalen Erstreckung des Turms, kann insbesondere rund oder mehreckig, vorzugsweise achteckig, zwölfeckig oder vierundzwanzigeckig, sein. Wenn im Folgenden von einer ringförmigen Ausbildung oder einer ringförmigen Geometrie gesprochen wird, sind vorzugsweise sowohl runde als auch mehreckige Querschnitte des Turms bzw. Turmrings umfasst.

Ein solcher Turm umfasst in der Regel eine Anzahl von Turmringen, die eine ringförmige Geometrie mit einer definierten Höhe aufweisen. Die ringförmig ausgebildete Wandung weist ferner eine Dicke auf. Die Turmringe sind vorzugsweise entlang der longitudinalen Erstreckung des Turms derart aneinander angeordnet, dass die Stirnflächen im Wesentlichen vollständig aneinander anliegen.

Die Turmringe umfassen häufig mehrere Segmente, um unter anderem den Transport, insbesondere die Anlieferung der Turmringe zum Aufstellort der Windenergieanlage, durch Bauteile mit einer geringeren Größe zu vereinfachen. Insbesondere betrifft dies die Turmringe, die im unteren Bereich des Turms angeordnet sind, da diese in der Regel den größten Durchmesser aufweisen. Ein Turmring kann beispielsweise aus zwei Segmenten, die beispielsweise jeweils ein 180 Bogengrad Segment des Turmrings bilden, zusammengesetzt werden. Ein Turmring kann aber auch aus mehreren Segmenten, die beispielsweise jeweils ein plattenförmiges oder schalenförmiges Segment eines Turmrings bilden, zusammengesetzt werden. Für Betontürme und/oder Hybridtürme, insbesondere Betonturmabschnitte für Hybridtürme, werden diese Segmente vorzugsweise als Betonfertigteile industriell vorgefertigt und beim Aufbau des Turms am Aufstellort der Windenergieanlage zusammengesetzt und miteinander verbunden.

Ein Spannglied weist vorzugsweise eine Längsrichtung, eine Querrichtung, die orthogonal zur Längsrichtung orientiert ist, und eine Dickenrichtung, die orthogonal zur Längsrichtung und orthogonal zur Querrichtung orientiert ist, auf. Dabei ist die Erstreckung des Spannglieds in Längsrichtung größer, insbesondere um ein Vielfaches größer, als in Querrichtung. Vorzugsweise ist außerdem die Erstreckung des Spannglieds in Querrichtung größer als in Dickenrichtung. Die Erstreckung des Spannglieds in Querrichtung und in Dickenrichtung kann allerdings auch gleich sein. Bei dem beschriebenen Verfahren wird mindestens ein Spannglied in einer Form angeordnet.

Vorzugsweise werden mehrere, beispielsweise vier, Spannglieder in der Form, insbesondere parallel zueinander ausgerichtet, angeordnet.

Ein solches Spannglied umfasst oder besteht gemäß der hier beschriebenen Lösung aus faserverstärktem Kunststoff. Das Spannglied weist somit einen Faseranteil und einen Kunststoffanteil auf.

Beim Spannen des Spannglieds wird vorzugsweise entlang der Längsrichtung des Spannglieds eine Zugspannung auf das Spannglied aufgebracht. Dabei werden vorzugsweise zwei Enden des Spannglieds in der Längsrichtung auseinander bewegt, wodurch eine Dehnung in der Längsrichtung und somit eine Zugspannung in der Längsrichtung auf das Spannglied aufgebracht wird.

Das Spannglied wird in eine Betonmasse eingebettet. Dabei wird vorzugsweise eine nicht ausgehärtete fließfähige Betonmasse in die Form eingegossen, sodass das gespannte Spannglied, vorzugsweise vollständig, von der Betonmasse umschlossen ist. Anschließend wird die Betonmasse ausgehärtet. Dadurch wird vorzugsweise eine kraftschlüssige Verbindung zwischen dem Spannglied und der ausgehärteten Betonmasse hergestellt. Die ausgehärtete Betonmasse wird im Folgenden auch als Betonanteil bezeichnet. Vorzugsweise wird somit durch das Spannen des Spannglieds, und vorzugsweise die dem Spannglied aufgeprägte Zugspannung, das Segment vorgespannt, da das gespannte Spannglied, insbesondere durch die kraftschlüssige Verbindung zwischen dem Spannglied und der ausgehärteten Betonmasse, das resultierende Segment, insbesondere dessen Betonanteil, unter eine Druckspannung setzt, vorzugsweise entlang der Längsrichtung des Spannglieds.

Dabei wird die Betonmasse zu einem Längssegment, vorzugsweise in Form eines Gesamtlängssegments, ausgehärtet. Aus einem Gesamtlängssegment können insbesondere mehrere übereinander angeordneten Segmente hergestellt werden, indem das Gesamtlängssegment mehrfach durchtrennt wird, wobei die Segmente, wenn sie im Betonturm eingebaut sind, vorzugsweise in einer Richtung parallel zur und/oder entlang der longitudinalen Erstreckung des Turms, übereinander angeordnet sind. Ein Gesamtlängssegment kann sich vorzugsweise entlang des gesamten Betonturms oder des gesamten Betonturmabschnitts erstrecken. Bei einem Betonturm kann sich ein Gesamtlängssegment somit von einem Fundament ausgehend bis zum Ende des Turms, bei einem Turm einer Windenergieanlage insbesondere bis zum Verbindungsabschnitt zu einer Gondel, erstrecken. Bei einem Hybridturm kann sich ein Gesamtlängssegment von einem Fundament ausgehend bis zum Ende des Betonturmabschnitts, insbesondere bis zum Übergang zu einem Stahlturmabschnitt, erstrecken. In Umfangsrichtung des Turms sind vorzugsweise mehrere Segmente oder Längssegmente nebeneinander und aneinander anliegend angeordnet. Die mehreren Segmente, die aus einem Gesamtlängssegment und/oder einem Längssegment mittels Durchtrennen entstehen können, sind vorzugsweise miteinander verbunden, insbesondere in einem Zwischenschritt der Herstellung, bevor das Gesamtlängssegment und/oder das Längssegment in zwei oder mehrere Segmente getrennt wird. Aus einem Längssegment kann mindestens ein Segment, vorzugsweise mehrere Segmente, hergestellt werden. Die aus einem Längssegment und/oder aus einem Gesamtsegment hergestellten Segmente sind, wenn sie im Betonturm eingebaut sind, vorzugsweise in einer Richtung parallel zur und/oder entlang der longitudinalen Erstreckung des Turms, übereinander angeordnet. Aus einem Gesamtlängssegment können vorzugsweise zwei oder mehrere Segmente hergestellt werden. Vorzugsweise können außerdem aus einem Gesamtlängssegment zwei oder mehrere Längssegmente hergestellt werden. Die Längssegmente und/oder die Gesamtlängssegmente und/oder die Segmente können dabei plattenförmig ausgebildet sein und eine oder keine Krümmung aufweisen. Die Wandstärke der Gesamtlängssegmente, Längssegmente und Segmente kann entlang des Turms variieren. Die Gesamtlängssegmente und/oder die Längssegmente und/oder die Segmente weisen vorzugsweise jeweils eine Plattenebene auf, die gekrümmt oder nicht gekrümmt sein kann, wobei die Erstreckung der Gesamtlängssegmente, der Längssegmente und der Segmente in der Plattenebene um ein Vielfaches größer ist als die Erstreckung der Gesamtlängssegmente und/oder der Längssegmente und/oder der Segmente in Dickenrichtung, die orthogonal zur Plattenebene orientiert ist. Das Entformen des ausgehärteten Längssegments und/oder des ausgehärteten Gesamtlängssegments umfasst vorzugsweise das Entnehmen des Längssegments und/oder des Gesamtlängssegments aus der Form.

Die Reihenfolge der in diesem Verfahren beschriebenen Schritte ist nicht festgelegt und kann insbesondere in unterschiedlichen Abfolgen durchgeführt werden. Dabei ist es bevorzugt, wenn das Anordnen von mindestens einem Spannglied in der Form und/oder das Spannen des Spannglieds vor dem Einbetten des Spannglieds in eine Betonmasse erfolgt. Vorzugsweise erfolgt das Aushärten der Betonmasse zu einem Längssegment nach dem Einbetten des Spannglieds in eine Betonmasse. Vorzugsweise erfolgt das Entformen des ausgehärteten Längssegments nach dem Aushärten der Betonmasse zu einem Längssegment.

Ein erster Vorteil dieses Verfahrens besteht darin, dass durch die Verwendung von faserverstärktem Kunststoff für die eingebetteten Spannglieder, insbesondere aufgrund der hohen spezifischen Steifigkeit und der hohen spezifischen Festigkeit dieses Materials, das Gewicht der einzelnen Segmente reduziert werden kann. Weiterhin ist vorteilhaft, dass durch eine Anordnung von Fasern des Faseranteils in Längsrichtung eine optimale Aufnahme der Zugkräfte durch die Fasern erfolgen kann. Im Gegensatz zu Spanngliedern aus Stahl können bei der Verwendung von Spanngliedern aus faserverstärktem Kunststoff anisotrope Materialeigenschaften ausgenutzt werden, insbesondere durch eine Anordnung von Fasern in der und/oder parallel zu der Längsrichtung. Damit kann eine hohe Steifigkeit in Längsrichtung und eine hohe Festigkeit in Längsrichtung bei gleichzeitig relativ niedrigem Gewicht realisiert werden.

Ein weiterer Vorteil besteht darin, dass ein Spannglied, das faserverstärkten Kunststoff umfasst oder daraus besteht, chemisch beständiger sein kann als ein herkömmliches Spannglied, das beispielsweise aus Stahl besteht. Das Spannglied muss somit nicht zur Vermeidung von Korrosion einen Mindestabstand zum Rand des Segments aufweisen.

Ein weiterer Vorteil besteht darin, dass eine kraftschlüssige Verbindung zwischen dem Spannglied und der ausgehärteten Betonmasse ermöglicht wird. Dadurch kann entlang der gesamten Längserstreckung des Spannglieds eine Kraftübertragung zwischen dem Spannglied und der ausgehärteten Betonmasse erfolgen. Auf diese Weise kann eine platz- und werkzeugintensive Verankerung der gespannten Spannglieder an ihren Enden, wie sie insbesondere bei intern (in Hüllrohren) oder extern geführten Spanngliedern erforderlich ist, entfallen. Die Spannung des Spannglieds, insbesondere seine Zugspannung, kann somit in vorteilhafter Weise gleichmäßig über die Länge im Betonanteil eine Vorspannung erzeugen.

Durch die Verwendung von faserverstärktem Kunststoff für ein Spannglied oder für mehrere Spannglieder lassen sich somit schlankere und/oder leichtere Segmente herstellen. Damit können der Materialeinsatz und das Gewicht der Segmente verringert werden. Dies kann sowohl für den Transport der Segmente als auch für die Materialkosten vorteilhaft sein. So können nach dem beschriebenen Verfahren hergestellte Segmente vorzugsweise in einem Transportfahrzeug auf der Ladefläche transportiert werden, ohne dass es sich um eine übergroße Ladung bzw. einen Großraumtransport handelt. Dabei ist es von Vorteil, wenn keine Ausnahmegenehmigung für einen Transport einer übergroßen Ladung notwendig ist. Dadurch kann der Transport der Segmente wesentlich vereinfacht werden.

Ein weiterer Vorteil eines solchen Verfahrens ist, dass die mit einem derartigen Verfahren gefertigten Segmente bereits vorgespannt sind und somit ein aufwändiges Vorspannen der Segmente beim Errichten eines Turms nicht mehr notwendig ist.

Ein weiterer Vorteil eines solchen Verfahrens liegt darin, dass durch die Integration der Spannglieder im Betonanteil ein im Vergleich zu extern geführten Spanngliedern erheblich geringerer Platzbedarf besteht. Des Weiteren können die eingebetteten Spannglieder mit oder aus faserverstärkem Kunststoff gegenüber herkömmlichen Spannglieder aus Stahl das Gewicht und ggf. auch die Dicke der Segmente verringern, wodurch Material- und Transportkosten verringert werden können.

Die Spannglieder weisen einen vorzugsweise Faservolumengehalt von mindestens 40 Vol.-%, besonders bevorzugt mindestens 50 Vol.-% und insbesondere mindestens 55 Vol.-% auf. Die Fasern des Faseranteils liegen vorzugsweise in Form von Rovings bzw. Faserbündeln vor. Dabei sind vorzugsweise mindestens 80 %, besonders bevorzugt mindestens 90 %, insbesondere mindestens 99 %, der Fasern in der Längsrichtung des Spannglieds angeordnet. Ferner sind vorzugsweise mindestens 80 %, besonders bevorzugt mindestens 90 %, insbesondere mindestens 99 %, der Rovings bzw. Faserbündel in der Längsrichtung des Spannglieds angeordnet. Die Rovings bzw. Faserbündel werden vorzugsweise in Form von Fasergelegen und/oder Fasergeweben zusammengehalten. Insbesondere ist es bevorzugt, wenn alle Fasern in der Längsrichtung des Spannglieds angeordnet sind. Der Kunststoffanteil umfasst vorzugsweise oder besteht vorzugsweise aus einem Duroplast, insbesondere in Form eines Epoxidharzes oder eines ungesättigten Polyesters.

Die hier beschriebene Lösung ist nicht auf den Einsatz von Türmen, insbesondere Türme von Windenergieanlagen, beschränkt, auch wenn sie hier besonders vorteilhaft und auf wirtschaftliche Art und Weise eingesetzt werden kann. Vielmehr kann ein hier beschriebenes Verfahren zum Herstellen von Segmenten auch bei Bauwerken anderer Art, insbesondere bei hohen Bauwerken, eingesetzt werden.

In einer besonders bevorzugten Ausführungsform umfasst das Verfahren: Lösen einer Verbindung zwischen dem Spannglied und einer Vorspannvorrichtung. Die Vorspannvorrichtung ist vorzugsweise ausgebildet zum Halten und Spannen des Spannglieds. Die Vorspannvorrichtung bringt vorzugsweise eine Zugspannung auf das Spannglied auf. Dabei ist die Vorspannvorrichtung mit dem Spannglied, vorzugsweise lösbar, verbunden. Das Lösen der Verbindung zwischen dem Spannglied und der Vorspannvorrichtung erfolgt vorzugsweise nach dem Aushärten der Betonmasse zu einem Längssegment. Dadurch kann die Spannkraft auf die ausgehärtete Betonmasse übertragen werden. Das Lösen der Verbindung zwischen dem Spannglied und der Vorspannvorrichtung erfolgt außerdem vorzugsweise vor dem Entformen des ausgehärteten Längssegments.

Das Verfahren umfasst: Durchtrennen des Längssegments in mehrere Segmente. Dabei wird das Längssegment in mehrere Segmente getrennt. Die Längssegmente werden orthogonal zur Längsrichtung des Spannglieds durchtrennt. Dabei wird vorzugsweise das Spannglied mit durchtrennt. Dabei ist besonders vorteilhaft, dass die weiteren Verfahrensschritte, wie beispielsweise das Anordnen von mindestens einem Spannglied in einer Form, das Spannen des Spannglieds, das Einbetten des Spannglieds in eine Betonmasse und das Aushärten der Betonmasse zu einem Längssegment, für die Herstellung mehrerer Segmente nur einmal durchgeführt werden müssen.

Dabei ist es besonders bevorzugt, dass das Durchtrennen des Längssegments mittels Zersägen und/oder mittels Wasserstrahlschneiden erfolgt. Zum Zersägen des Längssegments wird vorzugsweise eine Betonsäge mit Diamantsägeblättern verwendet. Zum Durchtrennen des Längssegments mittels Wasserstrahlschneiden wird vorzugsweise eine Wasserstrahlschneidemaschine verwendet, wobei besonders bevorzugt ein Abrasivwasserstrahl mit mindestens einem Abrasivmittel verwendet wird.

Gemäß einer weiter bevorzugten Ausführungsform ist vorgesehen, dass das Verfahren umfasst: Anordnen einer Bewehrung in der Form, wobei die Bewehrung vorzugsweise Fasern, insbesondere polymerbeschichtete Fasern, und/oder faserverstärkten Kunststoff und/oder Stahl umfasst oder daraus besteht. Unter einer Bewehrung kann im Allgemeinen eine räumliche angeordnete Verstärkung verstanden werden. Die Bewehrung dient grundsätzlich der Verstärkung, insbesondere des Tragverhaltens, im Verbund mit Beton oder einem anderen Verbundmaterial des bewehrten Elements. Durch die Bewehrung können sowohl Druck- als auch Zug- und Biegekräfte aufgenommen werden. Die Bewehrung kann vorzugsweise Stäbe und/oder Fasern aus Materialien mit hoher Zugfestigkeit, wie zum Beispiel Metall, insbesondere Stahl, Glas und/oder Kohlenstoff, umfassen. Besonders bevorzugt ist es, die Bewehrung Fasern und/oder faserverstärkten Kunststoff umfasst oder daraus besteht. Ein derartiger mit Fasern bewehrter Beton wird häufig auch als Textilbeton bezeichnet. Insbesondere ist es vorteilhaft, wenn die Bewehrung Glasfasern, vorzugsweise AR-Glasfasern und/oder E-Glasfasern, und/oder Kohlenstofffasern umfasst. Vorzugsweise sind die Fasern mit einer Polymerbeschichtung versehen, wodurch die Fasern geschützt werden. Ein Vorteil von einer Verwendung einer derartigen Bewehrung ist, dass die mit einer Polymerbeschichtung versehenen Fasern chemisch beständiger als ein herkömmliches Spannglied, das beispielsweise aus Stahl besteht, sein können. Ein Vorteil bei einer Verwendung von AR-Glasfasern ist, dass ein Spannglied mit diesen Fasern chemisch beständiger als ein herkömmliches Spannglied, das beispielsweise aus Stahl besteht, sein kann. Die Bewehrung muss somit auch nicht zur Vermeidung von Korrosion einen Mindestabstand zum Rand des Segments aufweisen.

Weiter ist es bevorzugt, wenn das Verfahren umfasst: Herstellen des Spannglieds im Vakuuminfusionsverfahren und/oder Handlaminierverfahren und/oder Pultrusionsverfahren. Vorzugsweise werden beim Vakuuminfusionsverfahren die Fasern, besonders bevorzugt vorliegend in Form eines Geleges, in eine Form eingelegt, mit einer Vakuumfolie abgedeckt und anschließend mit einem fließfähigen Harz imprägniert, indem durch einen Unterdruck das Harz von einer Angussstelle oder mehreren Angussstellen zu einem Vakuumanschluss oder mehreren Vakuumanschlüssen fließt. Beim Vakuuminfusionsverfahren ist besonders vorteilhaft, dass ein relativ hoher Faservolumengehalt, insbesondere ein höherer Faservolumengehalt als beim Handlaminierverfahren, erreicht werden kann. Mit dem Pultrusionsverfahren können in einem kontinuierlichen Herstellungsverfahren faserverstärkte Profile hergestellt werden. Beim Pultrusionsverfahren ist besonders vorteilhaft, dass die Herstellung der Spannglieder kontinuierlich und zumindest zum Teil automatisiert erfolgen kann und somit wenig Personal für die Herstellung der Spannglieder benötigt wird.

Noch weiter ist es bevorzugt, wenn das Verfahren umfasst: Aufrauen der Oberfläche des Spannglieds, vorzugsweise mittels Besanden. Dies ist besonders vorteilhaft, da durch ein derartiges Aufrauen der Oberfläche die Kraft zwischen dem Spannglied und dem Betonanteil verbessert übertragen werden kann. Unter einem Besanden ist dabei insbesondere ein Aufbringen von Sand auf die Oberfläche des Spannglieds zu verstehen. Dabei wird vorzugsweise Sand auf die Oberfläche des Spannglieds aufgebracht und der Sand mit dem Spannglied verbunden, beispielsweise mittels einer Beschichtung und/oder eines Klebstoffs. Besonders bevorzugt wird dabei feinkörniger Sand mit einer Korngröße von vorzugsweise höchstens 0,5 mm, besonders bevorzugt höchstens 0,35 mm und insbesondere höchstens 0,2 mm verwendet. Durch das Besanden kann die Oberflächenrauigkeit der Oberfläche des Spannglieds erheblich erhöht werden und damit die Verbundfähigkeit zwischen dem Spannglied und dem Betonanteil verbessert werden.

Noch weiter ist es bevorzugt, wenn die Oberfläche des Spannglieds aufgeraut, vorzugsweise besandet, ist. Das Besanden erfolgt vorzugsweise durch Aufbringen eines Klebstoffs auf die Oberfläche des Spannglieds und anschließendem Aufbringen von Sand auf den Klebstoff, sodass der Klebstoff den Sand mit der Oberfläche des Spannglieds verbindet Das Besanden kann insbesondere auch erfolgen, indem ein Beschichtungsmaterial mit Sand, vorzugsweise in einem Beschichtungsbad angeordnet, zum Aufbringen einer Beschichtung auf die Oberfläche des Spannglieds aufgebracht wird. Dabei wird beim Aufbringen der Beschichtung auf die Oberfläche des Spannglieds, vorzugsweise mittels Tränken des Spannglieds in dem Beschichtungsbad, der Sand zusammen mit dem Beschichtungsmaterial auf die Oberfläche des Spannglieds aufgetragen.

Die Beschichtung ist vorzugsweise alkalibeständig, wodurch in vorteilhafter Weise unerwünschte chemische Reaktionen zwischen dem Spannglied und der Betonmasse vermieden werden können.

Ferner vorzugsweise ist die Beschichtung ausgebildet, den Verbund des Spannglieds mit der Betonmasse zu verbessern.

Außerdem weist die Beschichtung vorzugsweise eine Temperaturbeständigkeit von mindestens 60 °C, bevorzugt von mindestens 80 °C, besonders bevorzugt von mindestens 100 °C, auf.

Da die Temperaturbeständigkeit der Beschichtung und/oder des Spannglieds in der Regel die maximale Einsatztemperatur des gesamten Bauteils bestimmt, ist im Gegensatz zu herkömmlich verwendetem Textilbeton oder zu Betonteilen mit Stäben aus glasfaserverstärktem Kunststoff die Verwendung eines wie hier beschrieben hergestellten Segments bei sehr viel höheren Temperaturen, von beispielsweise bis zu 100 °C, möglich. Dies ist insbesondere bei Segmenten für Türme von Windenergieanlagen vorteilhaft, da diese Türme bei einer starken Sonneneinstrahlung relativ hohe Temperaturen von beispielsweise bis zu 60 °C aufweisen können.

Weiter ist es bevorzugt, wenn eine Bewehrung in dem Betonanteil angeordnet ist, wobei die Bewehrung vorzugsweise Fasern, insbesondere polymerbeschichtete Fasern, und/oder faserverstärkten Kunststoff, vorzugsweise mit einem Faseranteil, und/oder Stahl umfasst oder daraus besteht. Die Fasern der Bewehrung weisen vorzugsweise eine Schlichte, insbesondere alkalibeständige Schlichte, auf, wodurch eine vorteilhafte chemische Beständigkeit gegeben ist. Ferner vorzugsweise ist die Schlichte ausgebildet, den Verbund der Fasern und/oder des Faseranteils und/oder der Bewehrung mit der Betonmasse zu verbessern.

Außerdem weist die Schlichte vorzugsweise eine Temperaturbeständigkeit von mindestens 60 °C, vorzugsweise von mindestens 80 °C, besonders bevorzugt von mindestens 100 °C, auf.

Noch weiter ist es bevorzugt, wenn der faserverstärkte Kunststoff des Spannglieds einen Faseranteil aufweist, wobei vorzugweise der Faseranteil Glasfasern, insbesondere AR-Glasfasern und/oder E-Glasfasern, und/oder Kohlenstofffasern und/oder Polyethylenfasern und/oder Basaltfasern aufweist oder daraus besteht. Ferner vorzugsweise weist der faserverstärkte Kunststoff des Spannglieds einen Faseranteil auf, wobei die Fasern des Faseranteils eine Schlichte aufweisen. Dabei ist die Schlichte vorzugsweise alkalibeständig, wodurch eine vorteilhaft chemische Beständigkeit gegeben ist. Ferner vorzugsweise ist die Schlichte ausgebildet, den Verbund der Fasern und/oder des Faseranteils und/oder des Spannglieds mit der Betonmasse zu verbessern. Außerdem weist die Schlichte vorzugsweise eine Temperaturbeständigkeit von mindestens 60 °C, vorzugsweise von mindestens 80 °C, besonders bevorzugt von mindestens 100 °C, auf.

Noch weiter ist es bevorzugt, wenn der faserverstärkte Kunststoff des Spannglieds einen Matrixanteil mit einem Duroplast, insbesondere in Form von Epoxidharz oder ungesättigtem Polyester, aufweist. Dabei weist der Matrixanteil vorzugsweise eine hohe Temperaturbeständigkeit, vorzugsweise von mindestens 80 °C, besonders bevorzugt von mindestens 100 °C, auf.

In dem Gesamtlängssegment oder in dem Längssegment ist mindestens eine Verbindungsvorrichtung angeordnet, wobei die Spannglieder durch die Verbindungsvorrichtung hindurchgeführt sind oder an der Verbindungsvorrichtung vorbeigeführt sind. Die Verbindungsvorrichtung besteht aus Stahl und ist kraftschlüssig mit der ausgehärteten Betonmasse verbunden. Nach Durchtrennen des Gesamtlängssegments oder des Längssegments liegt die Verbindungsvorrichtung am Rand eines Segments. Mit der Verbindungsvorrichtung kann dann eine Verbindung, insbesondere eine Schraubverbindung, zu einem an dem Segment anliegenden Segment, das ebenfalls eine Verbindungsvorrichtung aufweisen kann, hergestellt werden. Insbesondere ist es dabei bevorzugt, wenn zwei Verbindungselemente in dem Gesamtsegment oder Längssegment nebeneinander angeordnet sind und das Durchtrennen zwischen diesen zwei
Verbindungselementen erfolgt, sodass die Verbindungselemente jeweils am Rand der hergestellten Segmente angeordnet sind.

Gemäß einem zweiten Aspekt wird die eingangs genannte Aufgabe gelöst durch ein vorgespanntes Segment für einen Turm gemäß Anspruch 7.

Gemäß einer besonders bevorzugten Ausführungsform weist der faserverstärke Kunststoff des Spannglieds einen Faseranteil mit Glasfasern, insbesondere AR-Glasfasern und/oder E-Glasfasern, und/oder Kohlenstofffasern und/oder Polyethylenfasern und/oder Basaltfasern und einen Matrixanteil mit einem Duroplast, insbesondere in Form von Epoxidharz oder ungesättigtem Polyester, auf. Dabei liegen die Fasern vorzugsweise als sogenannte Endlosfasern vor, die auch als Filamente bezeichnet werden können.

Weiter ist es bevorzugt, wenn der Betonanteil Feinbeton umfasst oder daraus besteht. Dabei weist die Betonmasse, aus der der Feinbeton durch Aushärten entsteht, vorzugsweise eine feine Gesteinskörnung auf. Die Gesteinskörnung beträgt vorzugsweise höchstens 64 mm, insbesondere höchstens 32 mm, höchstens 25 mm, höchstens 20 mm, höchstens 16 mm, weiter bevorzugt höchstens 8 mm, weiter bevorzugt höchstens 6 mm, besonders bevorzugt höchstens 4 mm und insbesondere höchstens 2 mm auf. Durch eine solche Begrenzung der Gesteinskörnung kann auch bei Verwendung einer Bewehrung, die Fasern und/oder faserverstärkten Kunststoff umfasst, die fließfähige Betonmasse zwischen Fasern und/oder faserverstärktem Kunststoff verteilt werden. Die Auswahl der Gesteinskörnung, die maximal verwendet wird, ist insbesondere abhängig von der Bauteilgeometrie und der Bewehrungsdichte. So sollte insbesondere eine feinere Gesteinskörnung gewählt werden, je kleiner die Bauteilgeometrie, insbesondere die Bauteildicke, ist und je dichter die Bewehrungsdichte ausgeführt ist.

Noch weiter ist es bevorzugt, wenn das Spannglied eine Längsrichtung, eine Querrichtung, die orthogonal zur Längsrichtung orientiert ist, und eine Dickenrichtung, die orthogonal zur Längsrichtung und orthogonal zur Querrichtung orientiert ist, aufweist, und die Erstreckung des Spannglieds in Längsrichtung größer, insbesondere um ein Vielfaches größer, ist als in Querrichtung und die Erstreckung des Spannglieds in Querrichtung vorzugsweise größer ist als in Dickenrichtung.

Gemäß einem weiteren Aspekt wird die eingangs genannte Aufgabe gelöst durch einen Turmring für einen Turm gemäß Anspruch 11.

Die erste und/oder zweite Seitenwand des Verbindungskörpers weist vorzugsweise jeweils eine im Wesentlichen flächige Geometrie auf, die durch eine Horizontalerstreckung und eine orthogonal zu dieser verlaufenden Vertikalerstreckung gebildet wird. Ferner weisen die Seitenwände eine orthogonal zur Horizontalerstreckung und zur Vertikalerstreckung gerichtete Dicke auf, die im Vergleich zu den Abmessungen der Horizontalerstreckung und der Vertikalerstreckung bevorzugt eine sehr geringe Abmessung aufweist. Die Seitenwände weisen dabei vorzugsweise eine überwiegend plane Oberfläche auf. Die Dicke der Seitenwände kann eine kontinuierliche Abmessung aufweisen, wobei ferner auch eine Verdickung oder Verjüngung an entsprechend höher und niedriger belasteten Bereichen vorgesehen werden kann. Ferner besteht die Möglichkeit, dass die Seitenwände Aussparungen und/oder Verrippungen aufweisen.

Gemäß einem weiteren Aspekt wird die eingangs genannte Aufgabe gelöst durch einen Turm einer Windenergieanlage gemäß Anspruch 12. Dabei ist es besonders bevorzugt, wenn sämtliche aneinander anliegende Segmente mittels Schraubverbindungen miteinander verbunden sind. Dabei ist vorteilhaft, dass die Segmente mittels Schraubverbindungen vor Ort mit relativ geringem Personal- und Zeitaufwand verbunden werden können.

Gemäß einem weiteren Aspekt wird die eingangs genannte Aufgabe gelöst durch eine Windenergieanlage gemäß Anspruch 13. Dabei ist der Turm vorzugsweise ausgebildet als Betonturm oder Hybridturm. Der Turm umfasst vorzugsweise mehrere horizontal übereinander angeordnete Turmringe. Der Turm weist eine Höhe von vorzugsweise über 80 m, besonders bevorzugt über 100 m und insbesondere über 120 m auf.

Beschrieben wird ferner eine Vorspannvorrichtung zum Halten und Spannen mindestens eines Spannglieds, umfassend: eine erste und eine zweite Klemmwange, zwischen denen das Spannglied, vorzugsweise kraftschlüssig, fixierbar ist, zur Aufnahme von in einer Längsrichtung des Spannglieds auf das Spannglied aufgebrachten Kraft; ein Kopfteil, das lösbar mit der ersten und der zweiten Klemmwange verbunden ist, wobei das Kopfteil einen Befestigungsabschnitt, vorzugsweise in Form von Durchgangslöchern, umfasst, wobei das Kopfteil parallel zur Längsrichtung des Spannglieds, vorzugsweise mittels einer Verbindung zwischen dem Kopfteil und einer Gewindestange, bewegbar ist, zum Spannen des Spannglieds mittels Aufbringung einer Dehnung auf das Spannglied. Dabei besteht vorzugsweise mittels Flächenpressung eine kraftschlüssige Verbindung zwischen den Klemmwangen und dem Spannglied. Die Klemmwangen sind vorzugsweise mittels mindestens einer Schraubverbindung miteinander verbunden. Das Kopfteil ist vorzugsweise mittels mindestens einer Schraubverbindung mit den Klemmwangen verbunden. Die Klemmwangen weisen vorzugsweise eine plattenförmige Geometrie auf. Dabei ist es bevorzugt, wenn die erste und die zweite Klemmwange die gleiche Form aufweisen.

Noch weiter ist es bevorzugt, wenn ein Segment umfasst: zwei an gegenüberliegenden Enden des Segments angeordnete Vorspannvorrichtungen. Vorzugsweise werden die an den Enden des Segments angeordneten Vorspannvorrichtungen an dem Segment belassen und mit im Turm verbaut. Dabei werden die Vorspannvorrichtungen vorzugsweise als Verbindungselemente zum Verbindungen von aneinander anliegenden Segmenten verwendet. Insbesondere können aneinander anliegende Segmente mittels Schraubverbindungen über die Befestigungsabschnitte verbunden werden.

Die zuvor beschriebenen weiteren Aspekte und ihre jeweiligen möglichen Fortbildungen weisen Merkmale bzw. Verfahrensschritte auf, die sie insbesondere dafür geeignet machen, mit einem hier beschriebenen Verfahren und seinen Fortbildungen hergestellt zu werden.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Es zeigen:
- Fig. 1:: eine schematische Darstellung einer Windenergieanlage mit einem Turm;
- Fig. 2a:: eine perspektivische Ansicht von Spanngliedern zwischen zwei Vorspannvorrichtungen;
- Fig. 2b:: eine perspektivische Ansicht von Spanngliedern zwischen zwei Vorspannvorrichtungen und mehreren Schraubkästen;
- Fig. 3a:: eine perspektivische Ansicht einer Vorspannvorrichtung mit daran verbundenen Spanngliedern;
- Fig. 3b:: eine perspektivische Ansicht eines Abschnitts einer Vorspannvorrichtung mit daran verbundenen Spanngliedern und neben den Spanngliedern angeordneten Schraubkästen;
- Fig. 4:: eine perspektivische Detailansicht der Verbindung zwischen einem Spannglied und einer Vorspannvorrichtung;
- Fig. 5:: eine perspektivische Schnittansicht der Verbindung zwischen einem Spannglied und einer Vorspannvorrichtung;
- Fig. 6a:: eine perspektivische Ansicht eines Gesamtlängssegments;
- Fig. 6b:: eine perspektivische Ansicht eines Gesamtlängssegments mit mehreren Schraubkästen;
- Fig. 7:: eine schematische Darstellung eines ersten Ausführungsbeispiels des Verfahrens zum Herstellen von Segmenten für einen Turm, insbesondere einer Windenergieanlage;
- Fig. 8:: eine schematische Darstellung eines zweiten Ausführungsbeispiels des Verfahrens zum Herstellen von Segmenten für einen Turm, insbesondere einer Windenergieanlage.

In den Figuren sind gleiche oder im Wesentlichen funktionsgleiche bzw. -ähnliche Elemente mit den gleichen Bezugszeichen bezeichnet.

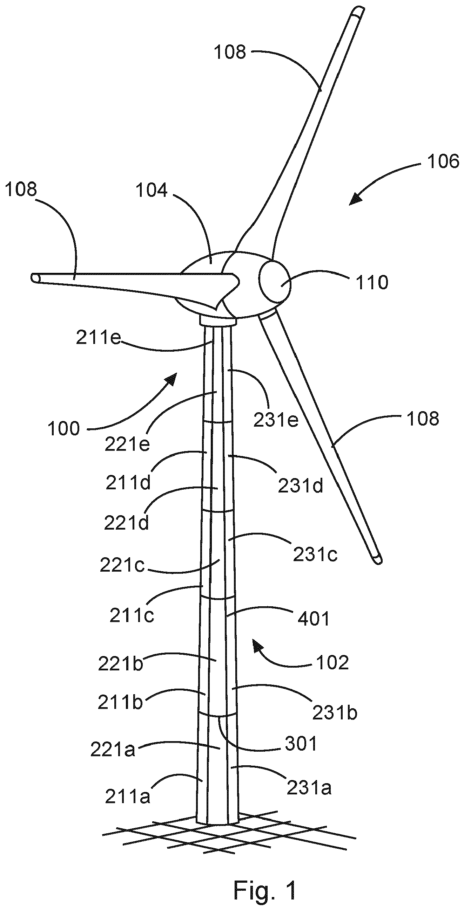

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Turm umfasst mehrere Segmente 211a...e, 221a...e, 231a...e. Dabei bilden jeweils mehrere Segmente 211a, 221a, 231a (sowie nicht gezeigte Segmente auf der Rückseite) einen Turmring, wobei die Segmente, die einen Turmring bilden jeweils über Vertikalfugen 401 miteinander verbunden sind. Die aneinander anliegenden Segmente werden entlang der Vertikalfugen mit einander verschraubt. Der Turm 102 weist im hier gezeigten Beispiel fünf übereinander angeordnete Turmringe auf, wobei die Turmringe jeweils über Horizontalfugen 301 miteinander verbunden sind. Die Turmringe sind entlang der Horizontalfugen mit einander verschraubt. Die Anzahl der Turmringe variiert insbesondere in Abhängigkeit von der Turmhöhe und insgesamt von den Turmdimensionen.

Horizontal übereinander angeordnete Segmenten können aus einem Gesamtlängssegment hergestellt sein. So wurden beispielsweise die Segmente 211a, 211b, 211c, 211d, 211e mittels Durchtrennen eines Gesamtlängssegments hergestellt. Außerdem wurden beispielsweise die Segmente 221a, 221b, 221c, 221d, 221e aus einem Gesamtlängssegment hergestellt. Außerdem wurden beispielsweise die Segmente 231a, 231b, 231c, 231d, 231e aus einem Gesamtlängssegment hergestellt. In diesem Ausführungsbeispiel wurden aus einem Längssegment zwei horizontal übereinander angeordnete Segmente hergestellt. So wurden beispielsweise 211a und 211b aus einem Längssegment hergestellt. Außerdem wurden beispielsweise 221a und 221b aus einem Längssegment hergestellt.

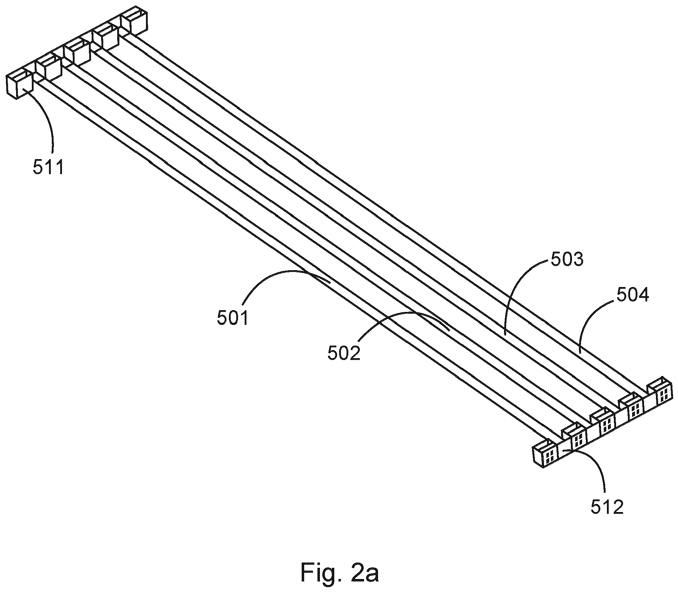

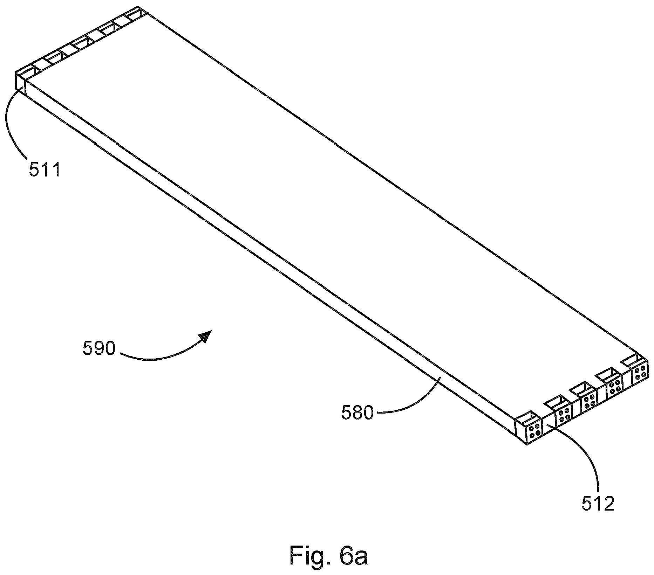

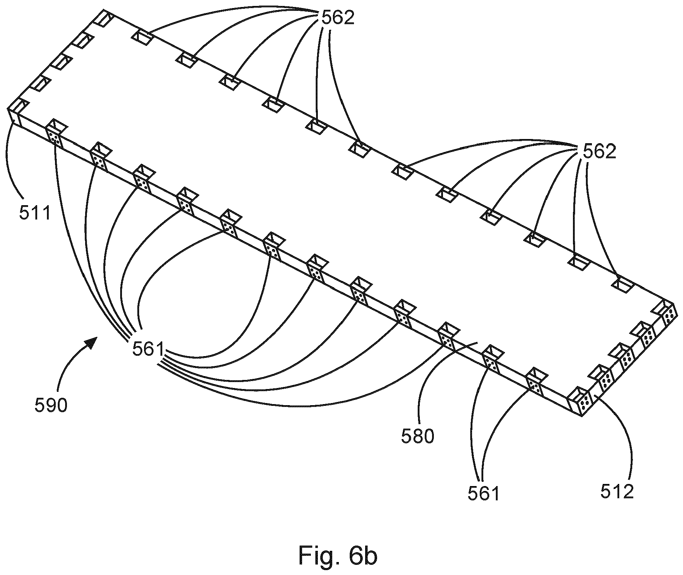

In den Figuren 2a, 2b, 3a, 3b, 4 und 5 sind Spannglieder, Vorspannvorrichtungen und Schraubkästen dargestellt, noch ohne Betonmasse oder Betonanteil. Die in den Figuren 2a, 2b, 3a, 3b, 4 und 5 dargestellten Spannglieder und ggf. Schraubkästen werden insbesondere in einer Form (nicht dargestellt) angeordnet, um dann in Betonmasse eingebettet zu werden, die dann zum Betonanteil aushärtet. In den Figuren 6a und 6b ist auch diese Betonmasse bzw. der Betonanteil abgebildet.

Fig. 2a zeigt vier Spannglieder 501, 502, 503, 504, die jeweils mit einer ersten Vorspannvorrichtung 511 und einer zweiten Vorspannvorrichtung 512 verbunden sind. Die Spannglieder 501, 502, 503, 504 weisen eine flächige bandförmige Geometrie auf. Die Spannglieder 501, 502, 503, 504 sind parallel zueinander angeordnet. Die Spannglieder 501, 502, 503, 504 bestehen aus faserverstärktem Kunststoff. Die Spannglieder werden dabei vorzugsweise mittels Schritt 1001 des beschriebenen Verfahrens hergestellt. Weiterhin kann die Oberfläche der Spannglieder, beispielswese nach Schritt 1002 des Verfahrens, aufgeraut sein. Die erste Vorspannvorrichtung 511 und die zweite Vorspannvorrichtung 512 können relativ zueinander auseinander bewegt werden, wodurch eine Zugspannung auf die Spannglieder 501, 502, 503, 504 aufgebracht werden kann, nach Schritt 1005 des Verfahrens.

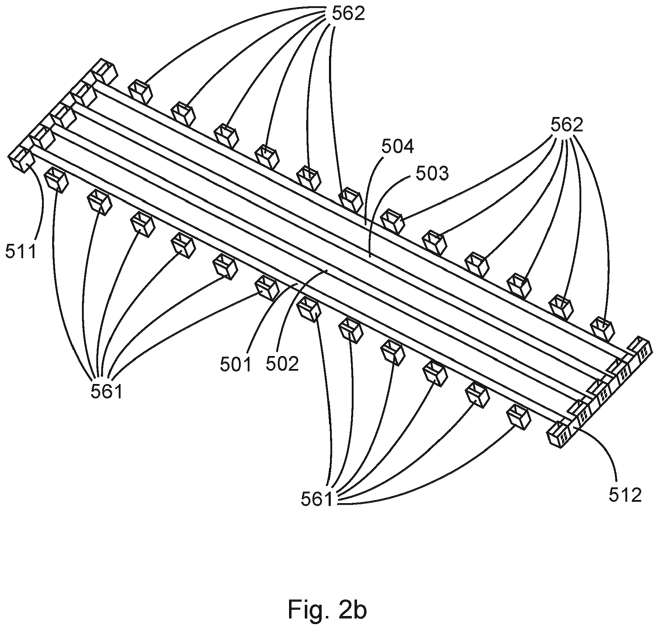

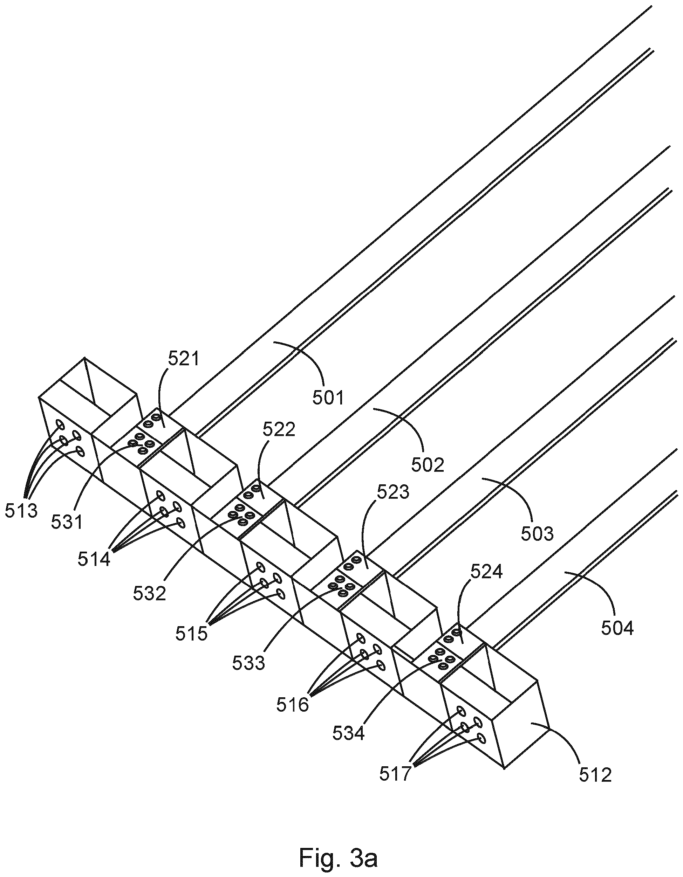

Fig. 2b zeigt ebenfalls vier Spannglieder 501, 502, 503, 504, die jeweils mit einer ersten Vorspannvorrichtung 511 und einer zweiten Vorspannvorrichtung 512 verbunden sind. Die Spannglieder 501, 502, 503, 504 weisen eine flächige bandförmige Geometrie auf. Die Spannglieder 501, 502, 503, 504 sind parallel zueinander angeordnet. Die Spannglieder 501, 502, 503, 504 bestehen aus faserverstärktem Kunststoff. Die Spannglieder werden dabei vorzugsweise mittels Schritt 1001 des beschriebenen Verfahrens hergestellt. Weiterhin kann die Oberfläche der Spannglieder, beispielswese nach Schritt 1002 des Verfahrens, aufgeraut sein. Die erste Vorspannvorrichtung 511 und die zweite Vorspannvorrichtung 512 können relativ zueinander auseinander bewegt werden, wodurch eine Zugspannung auf die Spannglieder 501, 502, 503, 504 aufgebracht werden kann, nach Schritt 1005 des Verfahrens. Des Weiteren zeigt Fig. 2b benachbart zu den Spanngliedern angeordnete Schraubkästen 561, 562. Die Schraubkästen sind nebeneinander parallel zu den Spanngliedern angeordnet. Die Schraubkästen 561 verlaufen neben dem Spannglied 501 und die Schraubkästen 562 verlaufen neben dem Spannglied 504.Fig. 3a zeigt die zweite Vorspannvorrichtung 512 und die vier Spannglieder 501, 502, 503, 504, die jeweils mit der zweiten Vorspannvorrichtung 512 verbunden sind. Dabei sind die Spannglieder 501, 502, 503, 504 jeweils über Klemmwangen 521, 522, 523, 524 an der zweiten Vorspannvorrichtung befestigt. Die Klemmwangen 521, 522, 523, 524 sind jeweils mittels Verbindungsplatten 531, 532, 533, 534 mit dem Kopfteil der Vorspannvorrichtung 512 verbunden. Das Kopfteil der Vorspannvorrichtung 512 weist mehrere Befestigungsabschnitte mit Durchgangslöchern 513, 514, 515, 516, 517 auf. Über diese Durchgangslöcher kann die Vorspannvorrichtung zum Aufbringen einer Zugspannung auf die Spannglieder entweder in einer Position fixiert werden, beispielsweise mittels einer Schraubverbindung, oder derart bewegbar verbunden sein, dass die Vorspannvorrichtung zum Aufbringen einer Zugspannung bewegbar ist. Die Spannglieder werden nach Schritt 1003 des Verfahrens in einer Form angeordnet.

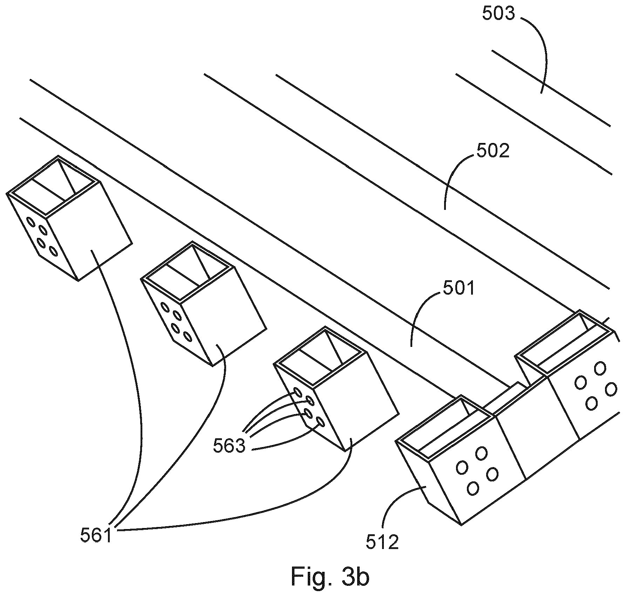

Fig. 3b zeigt die zweite Vorspannvorrichtung 512 und drei Spannglieder 501, 502, 503, die jeweils mit der zweiten Vorspannvorrichtung 512 verbunden sind. In dem hier gezeigten Beispiel sind mehrere Schraubkästen 561 neben dem Spannglied 501 angeordnet. Die Schraubkästen weisen jeweils Durchgangslöcher 563 auf. Diese Durchgangslöcher dienen im Einbauzustand bzw. im Betriebszustand des Turms dazu, mittels Schraubverbindungen zwei aneinander anliegende Segmente, Längssegmente oder Gesamtsegmente entlang einer Vertikalfuge 401 zu verbinden. Dabei können die Segmente, Längssegmente oder Gesamtsegmente mit den jeweils aneinander anliegenden Schraubkästen verbunden werden. Durch eine solche Verbindung aneinander anliegender Segmente kann ein Turmring hergestellt werden.

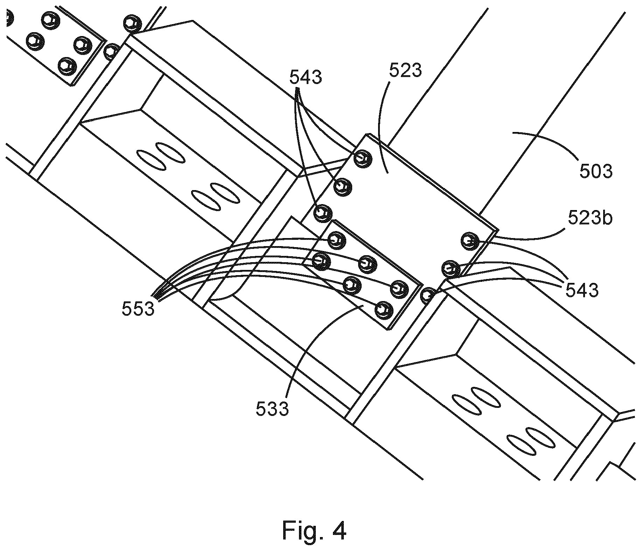

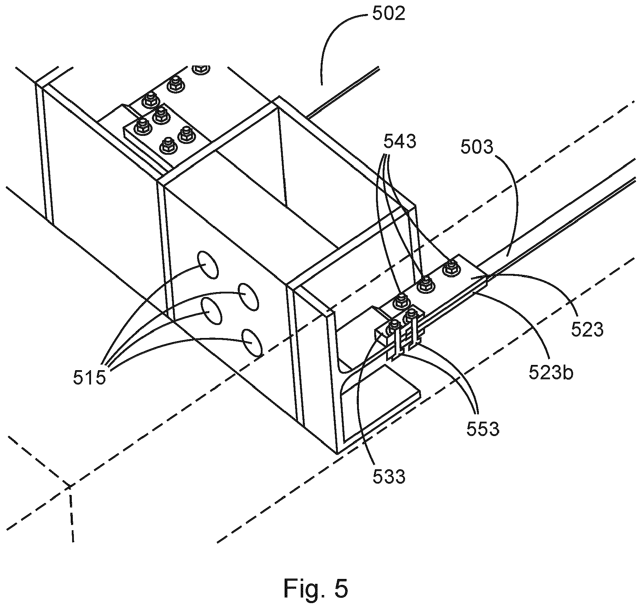

Fig. 4 und Fig. 5 zeigen ein Spannglied 503, dass zwischen einer ersten Klemmwange 523 und einer zweiten Klemmwange 523b eingeklemmt ist. Die Klemmkraft, die zwischen der ersten Klemmwange 523 und der zweiten Klemmwange 523b besteht, wird mittels sechs Schraubverbindungen 543 aufgebracht. Die Verbindungsplatte 533 verbindet über sechs Schraubverbindungen 553 die Klemmwangen 523, 523b mit dem Kopfteil der Vorspannvorrichtung.

Fig. 6a zeigt ein Gesamtlängssegment 590 mit einem formgebenden Betonanteil 580 und zwei Vorspannvorrichtungen 511, 512. Innerhalb des Betonanteils befinden sich die gespannten Spannglieder. Außerdem ist eine Bewehrung in Form einer Textilbewehrung mit Glasfasern in dem Betonanteil, nach Schritt 1004 des Verfahrens, angeordnet. Nach dem Spannen der Spannglieder durch auseinanderbewegen der beiden Vorspannvorrichtungen 511, 512 sowie Anordnen der Spannglieder und der Textilbewehrung in einer Form wird eine fließfähige Betonmasse in die Form gegeben, die die gespannten Spannglieder und die Textilbewehrung umhüllt, nach Schritt 1006 des Verfahrens. Anschließend wir die Betonmasse zu einem ausgehärteten Betonanteil 580 ausgehärtet, nach Schritt 1007 des Verfahrens. Das Gesamtlängssegment kann dann aus der Form entnommen werden, nach Schritt 1008 des Verfahrens. Anschließend kann das Gesamtlängssegment 590 mehrfach durchtrennt werden, sodass mehrere Segmente aus dem Gesamtlängssegment entstehen, nach Schritt 1009 des Verfahrens.

Bei dem in Fig. 6 gezeigten Bauteil kann es sich auch um ein analog aufgebautes Längssegment oder Segment handeln. Wenn das Gesamtlängssegment oder das Längssegment nicht durchtrennt wird oder ein Segment wie hier beschrieben aufgebaut ist, welche Ausführungsformen nicht in den Schutzumfang der beanspruchten Erfindung fallen, dann können die an dem Gesamtlängssegment oder Längssegment oder Segment vorhandenen Vorspannvorrichtungen verwendet werden, um über die Befestigungsabschnitte der Vorspannvorrichtungen jeweils mit einem daran anliegenden Segment oder Längssegment oder mit einem Fundament oder einem Stahlabschnitt eine Verbindung, insbesondere eine Schraubverbindung, herzustellen. Die in dem Gesamtlängssegment oder Längssegment oder Segment integrierte Vorspannvorrichtung kann somit als Verbindungsteil, insbesondere für eine Schraubverbindung, verwendet werden. Die Vorspannvorrichtung wird dabei ähnlich wie eine verlorene Schalung verwendet.

Fig. 6b zeigt ein zweites Ausführungsbeispiel eines Gesamtlängssegments 590 mit einem formgebenden Betonanteil 580 und zwei Vorspannvorrichtungen 511, 512. Dabei entspricht das dargestellte Gesamtlängssegment 590 dem in Fig. 6a dargestellten Gesamtlängssegment, mit dem Unterschied, dass bei dem hier dargestellten Gesamtlängssegment mehrere Schraubkästen 561, 562 an den beiden äußeren Rändern angeordnet sind. Diese Schraubkästen 561, 562 sind - nach dem Einbetten in eine Betonmasse und deren Aushärten - fest mit dem Betonanteil 580 verbunden. Die Schraubkästen sind dabei vorzugsweise bei einem Gesamtlängssegment, Längssegment oder Segment so angeordnet, dass jeweils die Schraubkästen 561 eines ersten Gesamtlängssegments, Längssegments oder Segments an den Schraubkästen 562 eines zweiten, im Einbauzustand bzw. im Betriebszustand des Turms daran anliegenden Gesamtlängssegments, Längssegments oder Segments anliegen, so dass jeweils eine Verbindung zwischen den Schraubkästen 561 und 562 der aneinander anliegenden Gesamtlängssegmente, Längssegmente oder Segmente hergestellt werden kann.

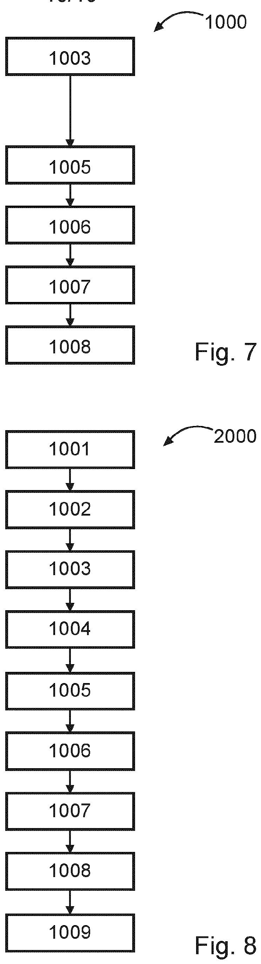

In Fig. 7 ist eine schematische Darstellung eines ersten Ausführungsbeispiels des Verfahrens 1000 zum Herstellen von Segmenten für einen Turm, insbesondere einer Windenergieanlage, gezeigt Im Schritt 1003 erfolgt Anordnen von mindestens einem Spannglied in einer Form, wobei das Spannglied faserverstärken Kunststoff umfasst oder daraus besteht. Dabei wird zunächst das Spannglied in eine Form platziert und so angeordnet, dass die Position der Spannglieder in der Form der Position der Spannglieder in dem Segment entspricht. Im Schritt 1005 erfolgt Spannen des Spannglieds. Dabei wird das Spannglied an den Enden jeweils mit einer Vorspannvorrichtung verbunden. Anschließend werden die Vorspannvorrichtungen auseinander bewegt. Dadurch wird eine Dehnung und damit eine Zugspannung auf das Spannglied aufgebracht. In Schritt 1006 erfolgt das Einbetten des Spannglieds in eine Betonmasse. In diesem Schritt wird eine fließfähige Betonmasse in die Form eingefüllt, so dass die Betonmasse das Spannglied umgibt. In Schritt 1007 erfolgt das Aushärten der Betonmasse zu einem Längssegment, vorzugsweise in Form eines Gesamtlängssegments eines Turms. Dabei wird die zunächst noch fließfähige Betonmasse ausgehärtet, sodass eine kraftschlüssige Verbindung zwischen dem Spannglied und der ausgehärteten Betonmasse entsteht. In Schritt 1008 erfolgt das Entformen des ausgehärteten Längssegments. Dabei wird das Längssegment mit ausgehärtetem Betonanteil aus der Form entnommen.

In Fig. 8 ist eine schematische Darstellung eines zweiten Ausführungsbeispiels des Verfahrens 2000 zum Herstellen von Segmenten für einen Turm, insbesondere einer Windenergieanlage, gezeigt. Das Verfahren 2000 stimmt in den Schritten 1003, 1005, 1006, 1007 und 1008 mit dem ersten Ausführungsbeispiel des Verfahrens 1000 zum Herstellen von Segmenten für einen Turm, insbesondere einer Windenergieanlage, beschrieben, überein. Das Verfahren 2000 weist weitere Schritte auf. In Schritt 1001 erfolgt das Herstellen des Spannglieds im Vakuuminfusionsverfahren und/oder Handlaminierverfahren und/oder Pultrusionsverfahren. Ein derart gefertigtes Spannglied besteht aus faserverstärktem Kunststoff. In Schritt 1002 erfolgt ein Aufrauen der Oberfläche des Spannglieds, vorzugsweise mittels Besanden. Dabei wird vorzugsweise Sand auf die Oberfläche des Spannglieds aufgebracht, beispielsweise zusammen mit einer Beschichtung, die den Sand an der Oberfläche bindet. Damit wird die Oberflächenrauigkeit des Spannglieds erhöht, wodurch eine verbesserte Kraftübertragung zwischen dem Spannglied und der ausgehärteten Betonmasse ermöglicht wird. Die Schritte 1001 und/oder 1002 können zeitlich und ggf. auch räumlich auch deutlich beabstandet zu den übrigen Schritten erfolgen.

In Schritt 1004 erfolgt das Anordnen einer Bewehrung in der Form, wobei die Bewehrung vorzugsweise Fasern, insbesondere polymerbeschichtete Fasern, und/oder faserverstärkten Kunststoff und/oder Stahl umfasst oder daraus besteht. Mit einer derartigen Bewehrung kann ein Textilbeton hergestellt werden, wodurch ein geringeres Gewicht der Segmente ermöglicht wird. In Schritt 1009 erfolgt das Durchtrennen des Längssegments in mehrere Segmente. Dabei erfolgt das Durchtrennen des Längssegments mittels Zersägen und/oder mittels Wasserstrahlschneiden, insbesondere um einzelne Segmente herzustellen. Die so hergestellten einzelnen Segmente umfassen weiterhin jeweils das mindestens eine, im Betonanteil eingebettete, gespannte Spannglied und sind somit vorgespannte Segmente.

### Bezugszeichenliste

- 100: Windenergieanlage
- 102: Turm
- 104: Gondel
- 106: Rotor
- 108: Rotorblätter
- 110: Spinner
- 211a, 211b, 211c, 211d, 211e: Segment
- 221a, 221b, 221c, 221d, 221e: Segment
- 231a, 231b, 231c, 231d, 231e: Segment
- 301: Horizontalfuge
- 401: Vertikalfuge
- 501, 502, 503, 504: Spannglieder
- 511: erste Vorspannvorrichtung
- 512: zweite Vorspannvorrichtung
- 513, 514, 515, 516, 517: Durchgangslöcher
- 521, 522, 523, 523b, 524: Klemmwange
- 531, 532, 533, 534: Verbindungsplatte
- 543, 553: Schraubverbindungen
- 561, 562: Schraubkasten
- 563: Durchgangslöcher der Schraubkästen
- 580: Betonanteil
- 590: Gesamtlängssegment
- 1000: erstes Ausführungsbeispiel des Verfahrens
- 1001: Herstellen des Spannglieds
- 1002: Aufrauen der Oberfläche des Spannglieds
- 1003: Anordnen von mindestens einem Spannglied in einer Form
- 1004: Anordnen einer Bewehrung in der Form
- 1005: Spannen des Spannglieds
- 1006: Einbetten des Spannglieds in eine Betonmasse
- 1007: Aushärten der Betonmasse zu einem Längssegment
- 1008: Entformen des ausgehärteten Längssegments
- 1009: Durchtrennen des Längssegments in mehrere Segmente
- 2000: zweites Ausführungsbeispiel des Verfahrens

## Patentansprüche

1. Verfahren zum Herstellen von Segmenten (211a-e, 221a-e, 231a-e) für einen Turm (102), insbesondere einer Windenergieanlage (100), umfassend:
- Anordnen (1003) von mindestens einem Spannglied (501, 502, 503, 504) in einer Form, wobei das Spannglied faserverstärken Kunststoff umfasst oder daraus besteht;
- Spannen (1005) des Spannglieds;
- Einbetten (1006) des Spannglieds in eine Betonmasse;
- Aushärten (1007) der Betonmasse zu einem Längssegment, vorzugsweise in Form eines Gesamtlängssegments eines Turms;
- Entformen (1008) des ausgehärteten Längssegments,
**gekennzeichnet durch**
- Durchtrennen (1009) des Längssegments in mehrere Segmente (211a-e, 221a-e, 231a-e) orthogonal zur Längsrichtung des Spannglieds,
- wobei in dem Längssegment mindestens eine Verbindungsvorrichtung angeordnet ist, wobei die Spannglieder durch die Verbindungsvorrichtung hindurchgeführt sind oder an der Verbindungsvorrichtung vorbeigeführt sind, die Verbindungsvorrichtung aus Stahl besteht und kraftschlüssig mit der ausgehärteten Betonmasse verbunden ist und nach Durchtrennen des Längssegments die Verbindungsvorrichtung am Rand eines Segments liegt.

2. Verfahren nach dem vorhergehenden Anspruch, umfassend:
- Lösen einer Verbindung zwischen dem Spannglied und einer Vorspannvorrichtung.

3. Verfahren nach mindestens einem der vorhergehenden Ansprüche,
wobei das Durchtrennen des Längssegments mittels Zersägen und/oder mittels Wasserstrahlschneiden erfolgt.

4. Verfahren nach mindestens einem der vorhergehenden Ansprüche, umfassend:
- Anordnen (1004) einer Bewehrung in der Form, wobei die Bewehrung vorzugsweise Fasern, insbesondere polymerbeschichtete Fasern, und/oder faserverstärkten Kunststoff und/oder Stahl umfasst oder daraus besteht.

5. Verfahren nach mindestens einem der vorhergehenden Ansprüche, umfassend:
- Herstellen (1001) des Spannglieds (501, 502, 503, 504) im Vakuuminfusionsverfahren und/oder Handlaminierverfahren und/oder Pultrusionsverfahren, und/oder
- Aufrauen (1002) der Oberfläche des Spannglieds (501, 502, 503, 504), vorzugsweise mittels Besanden.

6. Verfahren nach mindestens einem der vorhergehenden Ansprüche, wobei
der faserverstärkte Kunststoff des Spannglieds einen Faseranteil aufweist, wobei vorzugweise der Faseranteil Glasfasern, insbesondere AR-Glasfasern und/oder E-Glasfasern, und/oder Kohlenstofffasern und/oder Polyethylenfasern und/oder Basaltfasern aufweist oder daraus besteht,
und/oder
der faserverstärkte Kunststoff des Spannglieds einen Faseranteil aufweist, wobei die Fasern des Faseranteils eine Schlichte aufweisen,
und/oder
der faserverstärkte Kunststoff des Spannglieds einen Matrixanteil mit einem Duroplast, insbesondere in Form von Epoxidharz oder ungesättigtem Polyester, aufweist.

7. Vorgespanntes Segment (211a-e, 221a-e, 231a-e) für einen Turm (102), insbesondere einer Windenergieanlage (100), umfassend:
- einen Betonanteil (580);
- mindestens ein in dem Betonanteil eingebettetes gespanntes Spannglied (501, 502, 503, 504);
- wobei das Spannglied faserverstärkten Kunststoff umfasst oder daraus besteht, **dadurch gekennzeichnet, dass**
- das Segment durch Durchtrennen (1009) des Längssegments in mehrere Segmente (211a-e, 221a-e, 231a-e) orthogonal zur Längsrichtung des Spannglieds gebildet ist und nach dem Durchtrennen am Rand des Segments eine Verbindungsvorrichtung liegt, die aus Stahl besteht und kraftschlüssig mit der ausgehärteten Betonmasse verbunden ist, wobei die Spannglieder durch die Verbindungsvorrichtung hindurchgeführt sind oder an der Verbindungsvorrichtung vorbeigeführt sind.

8. Segment nach dem vorhergehenden Anspruch,
wobei der faserverstärke Kunststoff des Spannglieds
- einen Faseranteil mit Glasfasern, insbesondere AR-Glasfasern und/oder E-Glasfasern, und/oder Kohlenstofffasern und/oder Polyethylenfasern und/oder Basaltfasern
- und einen Matrixanteil mit einem Duroplast, insbesondere in Form von Epoxidharz oder ungesättigtem Polyester,
aufweist.

9. Segment nach mindestens einem der Ansprüche 7-8,
wobei der Betonanteil (580) Feinbeton umfasst oder daraus besteht.

10. Segment nach mindestens einem der Ansprüche 7-9,
wobei das Spannglied
- eine Längsrichtung,
- eine Querrichtung, die orthogonal zur Längsrichtung orientiert ist,
- und eine Dickenrichtung, die orthogonal zur Längsrichtung und orthogonal zur Querrichtung orientiert ist,
aufweist,
und die Erstreckung des Spannglieds in Längsrichtung größer, insbesondere um ein Vielfaches größer, ist als in Querrichtung und die Erstreckung des Spannglieds in Querrichtung vorzugsweise größer ist als in Dickenrichtung.

11. Turmring für einen Turm (102), insbesondere einer Windenergieanlage (100), umfassend
- mindestens zwei Segmente nach mindestens einem der Ansprüche 7-10, wobei die Segmente jeweils miteinander verbunden sind mit mindestens einem Verbindungskörper zum Einsetzen in den Turmring, umfassend eine erste Seitenwand mit mindestens einer von einem Befestigungselement durchdringbaren ersten Öffnung, und eine der ersten Seitenwand gegenüberliegende zweite Seitenwand mit mindestens einer von einem Befestigungselement durchdringbaren zweiten Öffnung, eine obere Querwand und eine untere, der oberen gegenüberliegende Querwand; wobei die obere und untere Querwand im Wesentlichen orthogonal zu der ersten und zweiten Seitenwand angeordnet sind und diese verbinden.

12. Turm (102) einer Windenergieanlage (100), umfassend:
- mehrere Segmente nach mindestens einem der Ansprüche 7-10 und/oder mehrere Turmringe nach dem vorhergehenden Anspruch,
- wobei die Segmente, vorzugsweise lösbar, besonders bevorzugt mittels Schraubverbindungen, miteinander verbunden sind.

13. Windenergieanlage (100), umfassend:
- einen Turm nach dem vorhergehenden Anspruch.

## Claims

1. A method for manufacturing segments (211a-e, 221a-e, 231a-e) for a tower (102), in particular of a wind turbine (100), comprising:
- arranging (1003) at least one prestressing element (501, 502, 503, 504) in a mold, wherein the prestressing element comprises or consists of fiber-reinforced plastic;
- tensioning (1005) the prestressing element;
- embedding (1006) the prestressing element in a concrete mass;
- hardening (1007) of the concrete mass into a longitudinal segment, preferably in the form of a complete longitudinal segment of a tower;
- removing (1008) the hardened longitudinal segment from the mold
**characterized by**
- cutting (1009) the longitudinal segment into several segments (211a-e, 221a-e, 231a-e) orthogonally to the longitudinal direction of the prestressing element,
- wherein at least one connecting device is arranged in the longitudinal segment, wherein the prestressing elements are passed through the connecting device or guided past the connecting device, wherein the connecting device consists of steel and is connected by force fit to the hardened concrete mass and wherein after cutting of the longitudinal segment, the connecting device lies at the edge of a segment.

2. The method as claimed in the preceding claim, comprising:
- releasing a connection between the prestressing element and a prestressing device.

3. The method as claimed in at least one of the preceding claims,
wherein the longitudinal segment is cut by means of sawing and/or by means of water jet cutting.

4. The method as claimed in at least one of the preceding claims, comprising:
- arranging (1004) a reinforcement in the mold, wherein the reinforcement preferably comprises or consists of fibers, in particular polymer-coated fibers, and/or fiber-reinforced plastic and/or steel.

5. The method as claimed in at least one of the preceding claims, comprising:
- producing (1001) the prestressing element (501, 502, 503, 504) in the vacuum infusion process and/or manual laminating process and/or pultrusion process, and/or
- roughening (1002) the surface of the prestressing element (501, 502, 503, 504), preferably by means of sanding.

6. The method as claimed in at least one of the preceding claims, wherein
the fiber-reinforced plastic of the prestressing element has a fiber part, wherein preferably the fiber part comprises and/or consists of glass fibers, in particular AR glass fibers and/or E glass fibers, and/or carbon fibers and/or polyethylene fibers and/or basalt fibers,
and/or
the fiber-reinforced plastic of the prestressing element has a fiber part, wherein the fibers of the fiber part have a refractory coating,
and/or
the fiber-reinforced plastic of the prestressing element has a matrix part with a duroplastic, in particular in the form of epoxy resin or unsaturated polyester.

7. A prestressed segment (211a-e, 221a-e, 231a-e) for a tower (102), in particular of a wind turbine (100), comprising:
- a concrete part (580);
- at least one tensioned prestressing element embedded in the concrete part (501, 502, 503, 504);
- wherein the prestressing element comprises or consists of fiber-reinforced plastic
**characterized in that**
- the segment is formed by cutting (1009) the longitudinal segment into several segments (211a-e, 221a-e, 231a-e) orthogonally to the longitudinal direction of the prestressing element and, after cutting, a connecting device lies at the edge of a segment, wherein the connecting device consists of steel and is connected by force fit to the hardened concrete mass, wherein the prestressing elements are passed through the connecting device or guided past the connecting device.

8. The segment as claimed in the preceding claim,
wherein the fiber-reinforced plastic of the prestressing element has
- a fiber part with glass fibers, in particular AR glass fibers and/or E glass fibers, and/or carbon fibers and/or polyethylene fibers and/or basalt fibers,
- and a matrix part with a duroplastic, in particular in the form of epoxy resin or unsaturated polyester.

9. The segment as claimed in at least one of claims 7-8,
wherein the concrete part (580) comprises or consists of fine concrete.

10. The segment as claimed in at least one of claims 7-9,
wherein the prestressing element has
- a longitudinal direction,
- a transverse direction oriented orthogonally to the longitudinal direction,
- and a thickness direction oriented orthogonally to the longitudinal direction and orthogonally to the transverse direction,
and the extent of the prestressing element in the longitudinal direction is greater, in particular many times greater, than in the transverse direction, and the extent of the prestressing element in the transverse direction is preferably greater than in the thickness direction.

11. A tower ring for a tower (102), in particular of a wind turbine (100), comprising
- at least two segments as claimed in at least one of claims 7-10, wherein the segments are each connected together by at least one connecting body for insertion in the tower ring, comprising a first side wall with at least a first opening through which a fixing element may pass, and a second side wall opposite the first side wall with at least one second opening through which a fixing element may pass, an upper transverse wall and a lower transverse wall opposite the upper transverse wall; wherein the upper and lower transverse walls are arranged substantially orthogonally to the first and second side walls and connect the latter.

12. A tower (102) of a wind turbine (100), comprising:
- several segments as claimed in at least one of claims 7-10 and/or several tower rings as claimed in the preceding claim,
- wherein the segments are connected together, preferably releasably, particularly preferably by means of bolted connections.

13. A wind turbine (100), comprising:
- a tower as claimed in the preceding claim.

## Revendications

1. Procédé pour fabriquer des segments (211a-e, 221a-e, 231a-e) pour une tour (102), en particulier d'une éolienne (100), comprenant :
- la disposition (1003) d'au moins un organe de contrainte (501, 502, 503, 504) dans un moule, dans lequel l'organe de contrainte comprend une matière plastique renforcée par des fibres ou en est constitué ;
- la contrainte (1005) de l'organe de contrainte ;
- l'insertion (1006) de l'organe de contrainte dans une masse de béton ;
- le durcissement (1007) de la masse de béton en un segment longitudinal, de préférence sous la forme d'un segment longitudinal total d'une tour ;
- le démoulage (1008) du segment longitudinal durci,
**caractérisé par**
- le sectionnement (1009) du segment longitudinal en plusieurs segments (211a-e, 221a-e, 231a-e) perpendiculairement à la direction longitudinale de l'organe de contrainte,
- dans lequel au moins un dispositif de liaison est disposé dans le segment longitudinal, dans lequel les organes de contrainte sont guidés à travers le dispositif de liaison ou sont amenés à passer devant le dispositif de liaison, le dispositif de liaison est constitué d'acier et est relié à force à la masse de béton durcie et, après le sectionnement du segment longitudinal, le dispositif de liaison se situe sur le bord d'un segment.

2. Procédé selon la revendication précédente, comprenant :
- la libération d'une liaison entre l'organe de contrainte et un dispositif de précontrainte.

3. Procédé selon au moins l'une des revendications précédentes,
dans lequel le sectionnement du segment longitudinal s'effectue au moyen d'un sciage et/ou au moyen d'un découpage au jet d'eau.

4. Procédé selon au moins l'une des revendications précédentes, comprenant :
- la disposition (1004) d'une armature dans le moule, dans lequel l'armature comprend de préférence des fibres, en particulier des fibres revêtues de polymère, et/ou une matière plastique renforcée par des fibres et/ou de l'acier ou en est constituée.

5. Procédé selon au moins l'une des revendications précédentes, comprenant :
- la fabrication (1001) de l'organe de contrainte (501, 502, 503, 504) dans le procédé d'infusion sous vide et/ou procédé de stratification au contact et/ou procédé de pultrusion et/ou
- le grattage (1002) de la surface de l'organe de contrainte (501, 502, 503, 504), de préférence au moyen d'un sablage.

6. Procédé selon au moins l'une des revendications précédentes, dans lequel
la matière plastique renforcée par des fibres de l'organe de contrainte présente une part de fibres, dans lequel de préférence la part de fibres présente des fibres de verre, en particulier des fibres de verre AR et/ou fibres de verre E, et/ou des fibres de carbone et/ou des fibres de polyéthylène et/ou des fibres de basalte ou en est constituée,
et/ou
la matière plastique renforcée par des fibres de l'organe de contrainte présente une part de fibres, dans lequel les fibres de la part de fibres présentent un produit d'encollage,
et/ou
la matière plastique renforcée par des fibres de l'organe de contrainte présente une part matricielle avec une résine thermodurcissable, en particulier sous la forme d'une résine époxyde ou d'un polyester insaturé.

7. Segment (211a-e, 221a-e, 231a-e) précontraint pour une tour (102), en particulier d'une éolienne (100), comprenant :
- une part de béton (580) ;
- au moins un organe de contrainte (501, 502, 503, 504) contraint inséré dans la part de béton ;
- dans lequel l'organe de contrainte comprend une matière plastique renforcée par des fibres ou en est constitué,
**caractérisé en ce que**
- le segment est formé par sectionnement (1009) du segment longitudinal en plusieurs segments (211a-e, 221a-e, 231a-e) perpendiculairement à la direction longitudinale de l'organe de contrainte et, après le sectionnement, un dispositif de liaison, qui est constitué d'acier et est relié à force à la masse de béton durcie, se situe sur le bord du segment, dans lequel les organes de contrainte sont guidés à travers le dispositif de liaison ou sont amenés à passer devant le dispositif de liaison.

8. Segment selon la revendication précédente,
dans lequel la matière plastique renforcée par des fibres de l'organe de contrainte présente
- une part de fibres avec des fibres de verre, en particulier des fibres de verre AR et/ou fibres de verre E, et/ou des fibres de carbone et/ou des fibres de polyéthylène et/ou des fibres de basalte
- et une part matricielle avec une résine thermodurcissable, en particulier sous la forme d'une résine époxyde ou d'un polyester insaturé.

9. Segment selon au moins l'une des revendications 7-8,
dans lequel la part de béton (580) comprend du béton fin ou en est constituée.

10. Segment selon au moins l'une des revendications 7-9,
dans lequel l'organe de contrainte présente
- une direction longitudinale,
- une direction transversale, qui est orientée perpendiculairement à la direction longitudinale,
- et une direction d'épaisseur, qui est orientée perpendiculairement à la direction longitudinale et perpendiculairement à la direction transversale,
et l'étendue de l'organe de contrainte dans la direction longitudinale est plus grande, en particulier plus grande d'un multiple, que dans la direction transversale et l'étendue de l'organe de contrainte dans la direction transversale est de préférence plus grande que dans la direction d'épaisseur.

11. Anneau de tour pour une tour (102), en particulier d'une éolienne (100), comprenant
- au moins deux segments selon au moins l'une des revendications 7-10, dans lequel les segments sont respectivement reliés l'un à l'autre avec au moins un corps de liaison à introduire dans l'anneau de tour, comprenant une première paroi latérale avec au moins une première ouverture pouvant être traversée par un élément de fixation et une deuxième paroi latérale opposée à la première paroi latérale avec au moins une deuxième ouverture pouvant être traversée par un élément de fixation, une paroi transversale supérieure et une paroi transversale inférieure opposée à la supérieure ; dans lequel les parois transversales supérieure et inférieure sont disposées sensiblement perpendiculairement aux première et deuxième parois latérales et relient celles-ci .

12. Tour (102) d'une éolienne (100), comprenant :
- plusieurs segments selon au moins l'une des revendications 7-10 et/ou plusieurs anneaux de tour selon la revendication précédente,
- dans lequel les segments sont reliés les uns aux autres, de préférence de manière libérable, de manière particulièrement préférée au moyen de liaisons vissées.

13. Eolienne (100), comprenant :
- une tour selon la revendication précédente.
